# EUROPÄISCHE PATENTSCHRIFT

(11) **EP 3 898 326 B1**
(45) Veröffentlichungstag und Bekanntmachung des Hinweises auf die Patenterteilung: **16.08.2023**
(21) Anmeldenummer: 19808815.5
(22) Anmeldetag: 26.11.2019
(51) Int. Cl.: B60Q 1/076, B60Q 1/068

(54) **EINSTELLVORRICHTUNG FÜR EINEN KRAFTFAHRZEUGSCHEINWERFER**
CONFIGURATION DEVICE FOR A MOTOR VEHICLE HEADLIGHT
DISPOSITIF DE RÉGLAGE POUR UN PHARE DE VÉHICULE AUTOMOBILE

(30) Priorität: 18.12.2018 EP 18213382
(43) Veröffentlichungstag der Anmeldung: 27.10.2021
(73) Patentinhaber: ZKW Group GmbH, 3250 Wieselburg (AT)
(72) Erfinder: SEEL, Reinhard, 3200 Ober-Grafendorf (AT); BAUER, Günter, 3372 Blindenmarkt (AT)
(74) Vertreter: Patentanwaltskanzlei Matschnig & Forsthuber OG
(86) Internationale Anmeldenummer: PCT/EP2019/082582
(87) Internationale Veröffentlichungsnummer: WO 2020/126349

(56) Entgegenhaltungen:
- EP-A1- 0 588 715
- EP-A1- 2 112 021
- EP-A1- 2 213 513
- EP-A1- 2 394 850
- EP-A1- 2 918 447
- DE-A1- 10 332 976
- DE-A1-102005 038 829
- DE-A1-102014 200 237

## Beschreibung

Die Erfindung betrifft eine Einstellvorrichtung zur Einstellung zumindest einer optisch relevanten Baueinheit eines Kraftfahrzeugscheinwerfers.

Ferner betrifft die Erfindung einen Kraftfahrzeugscheinwerfer mit einem Gehäuse und zumindest einer erfindungsgemäßen Einstellvorrichtung.

Zur gesetzeskonformen Einstellung des mit einem Kraftfahrzeugscheinwerfer erzeugten Lichtbildes ist es notwendig, dass ein oder mehrere optisch relevante Baueinheiten des Scheinwerfers unter anderem in Höhenrichtung und/oder seitlich einstellbar sind. Bei einer solchen relevanten optischen Baueinheit handelt es sich beispielsweise um ein Lichtmodul, etwa bestehend aus zumindest einer Lichtquelle, zumindest einem Reflektor, zumindest einer Linse etc.; es kann sich aber auch um einzelne Bauteile wie Reflektoren, Linsen etc. handeln, die entsprechend verstellt werden.

Dabei ist die zumindest eine optisch relevante Baueinheit häufig um eine oder mehrere Achsen, beispielsweise um eine horizontale und/oder vertikale Achse verschwenkbar in dem Scheinwerfer gelagert. Beispielsweise sind eine oder mehrere Lichtmodule an einem Tragerahmen gelagert, und der Tragerahmen ist um eine oder zwei Achsen, wie vorstehend beschrieben, verschwenkbar gelagert.

Einstellvorrichtungen zur Einstellung von optisch relevanten Baueinheiten von Kraftfahrzeugscheinwerfern, wie beispielsweise Lichtquellen, Reflektoren und/oder Linsen, erlauben eine Anpassung des durch den Scheinwerfer erzeugten Lichtbildes an vorgegebene Anforderungen. Dies erlaubt es, dass Abweichungen von Sollvorgaben, die beispielsweise nach einem Einbauvorgang des Scheinwerfers in ein Kraftfahrzeug festgestellt werden, nachträglich durch Verwendung einer Einstellvorrichtung ausgeglichen werden können.

Eine typische Aufgabe von Einstellvorrichtungen liegt in der Anpassung der Leuchtweite eines Scheinwerfers, wobei dieses technische Gebiet insbesondere unter dem Ausdruck "Leuchtweitenregulierung" - kurz LWR genannt - bekannt geworden ist.

Zur Verstellung ist in der Regel zumindest eine Antriebseinrichtung vorgesehen, wobei die Antriebseinrichtung üblicherweise manuell betätigbar ist. Beispielsweise umfasst die Antriebseinrichtung ein Drehrad bzw. eine Einstellschraube, deren Drehbewegung über eine geeignete Mechanik in eine Linearbewegung eines Gleitelements umgesetzt wird, welches in entsprechenden Gleitbahnen in dem Scheinwerfergehäuse verschiebbar geführt ist. Ein Verstellpunkt der optisch relevanten Baueinheit, z.B. des Tragerahmens, an welchem die Baueinheit angebracht ist, ist in dem Gleitelement gelagert, sodass bei einem Verschieben des Gleitelements die Baueinheit bzw. der Tragerahmen verschwenkt werden.

Eine Einstellvorrichtung zur Einstellung zumindest einer optisch relevanten Baueinheit eines Kraftfahrzeugscheinwerfers nach dem Oberbegriff des Anspruchs 1 ist aus dem Dokument DE102014200237 A1 bekannt.

Es ist eine Aufgabe der Erfindung eine verbesserte Einstellvorrichtung zur Einstellung zumindest einer optisch relevanten Baueinheit bereitzustellen.

Diese Aufgabe wird durch die Merkmale des Kennzeichens des Anspruchs 1 gelöst.

Die Lagerungsbuchse greift dergestalt an dem Tragerahmen bzw. indirekt an zumindest einer optisch relevanten Baueinheit, dass eine Bewegung des ersten als auch des zweiten Stellelements in eine geänderte Ausrichtung der optisch relevanten Baueinheit gewandelt werden kann. Bei der optisch relevanten Baueinheit kann es sich beispielsweise um Blenden(anordnungen), Lichtquellen, Reflektoren, Linsen, ganze Lichtmodule bzw. Baugruppen etc. handeln.

Weiters wird die Feinjustierung der Bewegung des Übertragungselements entlang der Verschubachse über das zweite Stellelement durch die Gewindesteigung des Gewindes des ersten Stellelements und des dazu korrespondierenden Gegengewindes des Übertragungselements bestimmt.

Es kann vorgesehen sein, dass der Lagerungsabschnitt einstückig bzw. einteilig mit dem Übertragungselement ausgebildet ist, wobei vorzugsweise das Übertragungselement mit dem Gegengewinde und dem Lagerungsabschnitt und/oder weiteren Elementen des Übertragungselements einstückig bzw. einteilig ausgebildet ist.

Es kann vorgesehen sein, dass das zweite Stellelement als Stellstange ausgebildet ist. Die Längsachse der Stellstange erstreckt sich hierbei entlang der Verschubachse.

Es kann jedoch auch vorgesehen sein, dass der erste Gegeneingriffsabschnitt des Übertragungselements als Gewinde ausgebildet ist und der erste Eingriffsabschnitt des ersten Stellelements als erste Öffnung mit einem zu dem Gewinde korrespondierenden Gegengewinde ausgebildet ist, wobei das erste Stellelement über das Gegengewinde zumindest teilweise auf dem Übertragungselement auf- bzw. angeschraubt ist, was aber nicht gemäß der beanspruchte Erfindung ist.

Es kann auch vorgesehen sein, dass der zweite Eingriffsabschnitt des zweiten Stellelements als zweite Öffnung ausgebildet ist, wobei das der zweite Gegeneingriffsabschnitt des Übertragungselements verschiebbar entlang der Verschubachse in der zweiten Öffnung des zweiten Stellelements gelagert ist, was aber auch nicht gemäß der beanspruchte Erfindung ist.

Eine Drehbewegung des zweiten Stellelements, welche vorzugsweise in Bezug auf das Übertragungselement bzw. den Tragerahmen bewegungsfest angeordnet ist, beispielsweise an einem Gehäuse eines Kraftfahrzeugscheinwerfers, führt zu einer Drehbewegung des Übertragungselements aufgrund der mechanisch ineinandergreifenden zweiten Eingriffs- bzw. zweiten Gegeneingriffsabschnitte, wobei die auf das Übertragungselement übertragene Drehbewegung des zweiten Stellelements eine Hubbewegung des Übertragungselements erzeugt, und zwar in dem Sinne, dass das Übertragungselement aufgrund des auf dem Gewinde des ersten Stellelements aufgeschraubte Gegengewinde weiter auf- und/oder abgeschraubt wird. Das erste Stellelement ist hierbei in Bezug auf das Übertragungselement drehfest angeordnet.

Mit Vorteil kann vorgesehen sein, dass das zweite Stellelement zumindest teilweise in der im Wesentlichen kreisförmigen, konzentrisch zur Verschubachse angeordneten zweiten Öffnung des Übertragungselements aufgenommen ist, wobei das Übertragungselement als Überdrehschutz elastische Zungen aufweist, die am Umfang der zweiten Öffnung angeordnet sind und sich entlang der Verschubachse erstrecken, wobei die elastischen Zungen Vorsprünge aufweisen, die dazu eingerichtet sind, in auf dem zweiten Stellelement angeordnete, korrespondierende Vertiefungen einzugreifen.

Hierbei kann vorgesehen sein, dass die Vorsprünge in Form von achsenparallelen Zapfen und die dazu korrespondierenden Vertiefungen als achsenparallele Rillen ausgeführt sind.

Vorteilhafterweise kann vorgesehen sein, dass die Antriebseinrichtung als linearer Stellmotor ausgebildet ist.

Ferner kann vorgesehen sein, dass die Antriebseinrichtung in Bezug auf den Tragerahmen bewegungsfest angeordnet ist.

Es kann vorgesehen sein, dass die Einstellvorrichtung ein Blockierungselement umfasst, welches in Kombination mit einem auf der Außenseite der Übertragungselements angeordneten Anschlages eingerichtet ist, eine Drehbewegung des Übertragungselements um die Verschubachse zu begrenzen.

Der Maximal- sowie der Minimalhub des Übertragungselements bei einer Verstellung bzw. einer Drehbewegung des zweiten Stellelements entlang der Verschubachse wird durch das Blockierungselement und dem korrespondierenden, an dem Übertragungselement angeordneten Anschlag begrenzt.

Es kann vorgesehen sein, dass der Lagerungsabschnitt des Übertragungselements als symmetrische Kugelschicht geformt ist, wobei die Lagerungsbuchse eine zu der symmetrischen Kugelschicht korrespondierende Öffnung aufweist.

Eine Kugelschicht, auch Kugelscheibe genannt, ist ein Teil einer Vollkugel, der von zwei parallelen Ebenen ausgeschnitten wird. Der gekrümmte Flächenteil wird auch Kugelzone genannt.

Gemäß der Erfindung ist der Tragerahmen horizontal angeordnet.

Weiters ist die Verschubachse vertikal angeordnet.

Dadurch liegt der Tragerahmen aufgrund seines Eigengewichts derart auf der Lagerbuchse bzw. der Einstellvorrichtung auf, dass kein Spiel in dem System vorhanden ist bzw. die jeweiligen "Aktuatoren" der Einstellvorrichtung vorbelastet sind. Dadurch können Toleranzketten innerhalb des Systems verkleinert bzw. verringert werden, sodass die Einstellvorrichtung insgesamt genauer ist bzw. die zumindest eine optisch relevante Baueinheit feiner justierbar ist.

Dementsprechend sind auch keine schwierig abzustimmenden Gleitelemente notwendig, wodurch ein Kraftfahrzeugscheinwerfergehäuse deutlich einfacher konstruiert und hergestellt werden kann.

Die Aufgabe wird ebenso durch einen Kraftfahrzeugscheinwerfer mit einem Gehäuse und zumindest einer optisch relevanten Baueinheit sowie mit zumindest einer erfindungsgemäßen Einstellvorrichtung gelöst.

Hierbei kann vorgesehen sein, dass die Antriebseinrichtung mit dem Gehäuse des Kraftfahrzeugscheinwerfers fest verbunden ist.

Nachfolgend wird die Erfindung anhand von beispielhaften Zeichnungen näher erläutert. Hierbei zeigt
Fig. 1A eine beispielhafte Einstellvorrichtung mit einem Antriebsmittel, welches ein erstes Stellelement aufweist, einem Übertragungselement mit elastischen Zungen, einer Lagerungsbuchse, in welcher das Übertragungselement gelagert ist und einem zweiten Stellelement,
Fig. 1B eine Querschnittsansicht der Einstellvorrichtung aus Fig. 1A,
Fig. 2 eine Querschnittsansicht durch das zweite Stellelement und der elastischen Zungen der Einstellvorrichtung aus Fig. 1A,
Fig. 3 einen beispielhaften Kraftfahrzeugscheinwerfer mit einem Gehäuse, einer beispielhaften Einstellvorrichtung und einem horizontal angeordneten Tragerahmen, der mit der Einstellvorrichtung verbunden ist,
Fig. 4 den Kraftfahrzeugscheinwerfer aus Fig. 3, wobei auf dem Tragerahmen eine optisch relevante Baueinheit angeordnet ist,
Fig. 5 eine Detailansicht der über der Lagerungsbuchse mit dem Tragerahmen verbundenen Einstellvorrichtung aus Fig. 1A, und
Fig. 6 eine Detailansicht des in der Lagerbuchse angeordneten Übertragungselements, wobei das Übertragungselement mittels einem Lagerungsabschnitt in der Lagerungsbuchse angeordnet ist.

Grundsätzlich kann es sich bei der optisch relevanten Baueinheit aber um ein Einzelteil eines Kraftfahrzeugscheinwerfers oder einer Leuchteinheit, etwa um einen Reflektor, eine Linse, eine Lichtquelle, eine Blendenanordnung etc. handeln, oder die optisch relevante Baueinheit umfasst ein oder mehrere solcher Bauteile oder ein oder mehrere Leuchteinheiten auf einem gemeinsamen Träger, der verschwenkbar ist.

Im Folgenden wird der Einfachheit halber von einem Lichtmodul als optisch relevante Baueinheit ausgegangen.

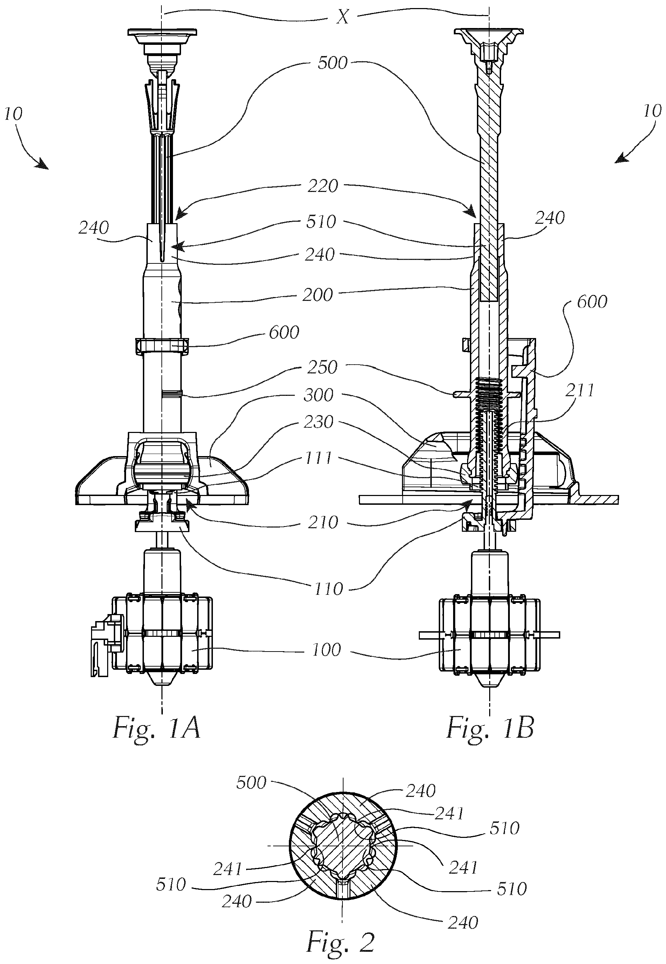

**Fig. 1A** zeigt eine beispielhafte Einstellvorrichtung **10** zur Einstellung zumindest einer optisch relevanten Baueinheit eines Kraftfahrzeugscheinwerfers, welche Einstellvorrichtung **10** eine Antriebseinrichtung **100,** welcher als linearer Stellmotor ausgebildet sein kann, mit einem entlang einer Verschubachse **X** linear verstellbaren ersten Stellelement **110,** welches drehfest angeordnet ist und einen ersten Eingriffsabschnitt aufweist, umfasst. Der erste Eingriffsabschnitt ist hierbei als Gewinde **111** ausgebildet.

Ferner umfasst die Einstellvorrichtung **10** ein mit dem ersten Stellelement **110** in mechanischen Eingriff stehendes Übertragungselement **200,** wobei das Übertragungselement **200** einen zu dem Gewinde **111** des ersten Stellelements **110** korrespondierenden ersten Gegeneingriffsabschnitt aufweist, welcher als erste Öffnung **210** mit einem zu dem Gewinde **111** korrespondierenden Gegengewinde **211** ausgebildet ist.

In **Fig. 1B** ist eine Querschnittsansicht der Einstellvorrichtung **10** zu sehen, wobei das Gewinde **111** und das Gegengewinde **211,** welche ineinander greifen, besser zu erkennen sind und zu sehen ist, dass das Übertragungselement **200** über das Gegengewinde **211** auf dem ersten Stellelement **110** zumindest teilweise aufgeschraubt ist, d.h. dass ein weiteres Auf- bzw. Abschrauben noch möglich ist.

Die Einstellvorrichtung **10** umfasst weiters eine Lagerungsbuchse **300,** in welcher das Übertragungselement **200** mittels einem Lagerungsabschnitt **230** des Übertragungselements **200** drehbar um die Verschubachse **X** gelagert ist, wobei der Lagerungsabschnitt **230** in dem gezeigten Beispiel einstückig bzw. einteilig ausgebildet ist, beispielsweise durch ein Spritzgussverfahren hergestellt.

Ferner ist ein zweites Stellelement **500** in **Fig. 1A** bzw. **1B** zu sehen, das um die Verschubachse **X** drehbar gelagert ist und einen zweiten Eingriffsabschnitt **510** aufweist, wobei das Übertragungselement **200** einen zweiten Gegeneingriffsabschnitt **220** aufweist, welcher zweite Gegeneingriffsabschnitt **220** der ersten Öffnung **210** des Übertragungselements **200** auf der Verschubachse **X** gegenüberliegend angeordnet ist. Der zweite Gegeneingriffsabschnitt des Übertragungselements **200** ist hierbei als zweite Öffnung **220** ausgebildet, wobei das zweite Stellelement **500** verschiebbar entlang der Verschubachse **X** in der zweiten Öffnung **220** des Übertragungselements **200** gelagert ist.

Das zweite Stellelement **500** ist zumindest teilweise in der im Wesentlichen kreisförmigen, konzentrisch zur Verschubachse **X** angeordneten zweiten Öffnung **220** des Übertragungselements **200** aufgenommen, wie in insbesondere in **Fig. 1B** ersichtlich ist, wobei das Übertragungselement **200** als Überdrehschutz elastische Zungen **240** aufweist, die am Umfang der zweiten Öffnung **220** angeordnet sind und sich entlang der Verschubachse **X** erstrecken.

**Fig. 2** zeigt eine Querschnittsansicht durch die elastischen Zungen **240** und das zweite Stellelement **500,** wobei die elastischen Zungen **240** Vorsprünge **241** aufweisen, die dazu eingerichtet sind, in auf dem zweiten Stellelement **500** angeordnete, korrespondierende Vertiefungen **510** einzugreifen. Die Vorsprünge **241** sind in Form von achsenparallelen Zapfen und die dazu korrespondierenden Vertiefungen **510** als achsenparallele Rillen ausgeführt, welche miteinander mechanisch in Eingriff stehen, wobei das zweite Stellelement **500** in Kombination mit dem Gewinde **111** des ersten Stellelements **110** dazu eingerichtet ist, eine Drehbewegung des zweiten Stellelements **500** in eine Hubbewegung des Übertragungselements **200** entlang der Verschubachse **X** zu wandeln, wobei das Übertragungselement **200** auf dem in Bezug auf das Übertragungselement **200** feststehenden ersten Stellelement **110** weiter auf- bzw. abgeschraubt wird und dadurch eine Hubbewegung des Übertragungselements **200** erreicht wird.

Um die Drehbewegung bzw. die Hubbewegung des Übertragungselements **200** zu begrenzen, weist die Einstellvorrichtung **10** ferner ein Blockierungselement **600** auf, welches in Kombination mit einem auf der Außenseite der Übertragungselements **200** angeordneten Anschlages **250** eingerichtet ist, eine Drehbewegung des Übertragungselements **200** um die Verschubachse **X** zu begrenzen, wobei das Blockierungselement **600** und der Anschlag **250** des Übertragungselements **200** in **Fig. 1B** besser ersichtlich sind.

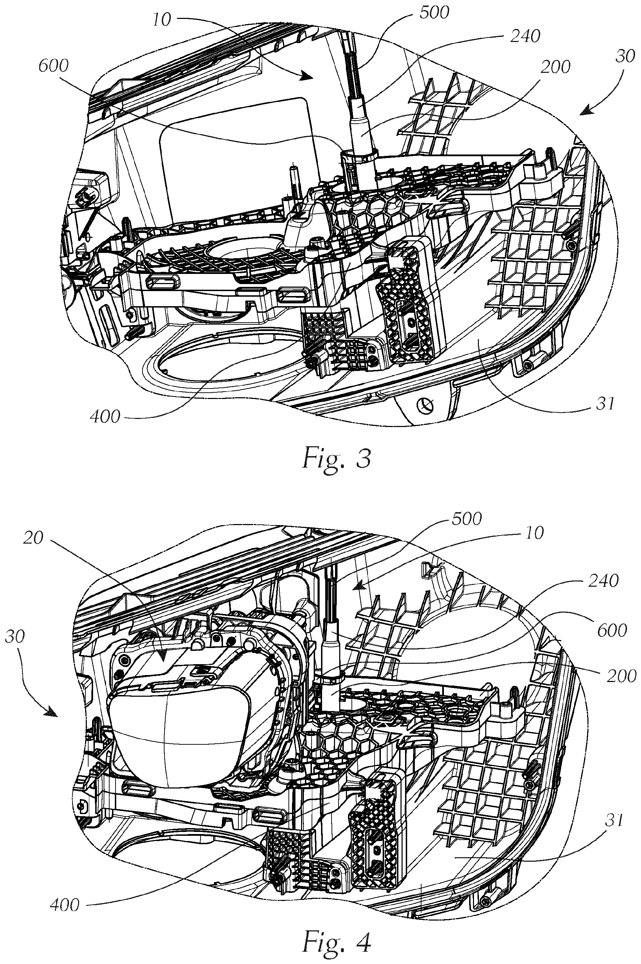

**Fig. 3** zeigt einen beispielhaften Kraftfahrzeugscheinwerfer **30** mit einem Gehäuse **31,** in welchem die zuvor beschriebene Einstellvorrichtung **10** angeordnet ist, wobei die Verschubachse **X** vertikal in dem Kraftfahrzeugscheinwerfer **30** angeordnet ist. Weiters ist zu sehen, dass die Einstellvorrichtung **10** einen Tragerahmen **400** umfasst, welcher mit der Lagerungsbuchse **300** fest verbunden ist (in **Fig. 3** nicht zu sehen) und horizontal bzw. orthogonal zur Verschubachse **X** angeordnet ist.

Es sei angemerkt, dass Begriffe wie "vertikal", "horizontal", "oben" und "unten" im Zusammenhang mit einem ordnungsgemäß verbauten Kraftfahrzeugscheinwerfer zu verstehen sind.

Auf dem Tragerahmen **400** ist eine optisch relevante Baueinheit **20** angeordnet, wie in **Fig. 4** zu sehen ist. Es sei angemerkt, dass auch mehrere optische Baueinheiten auf dem Tragerahmen **400** angeordnet werden können.

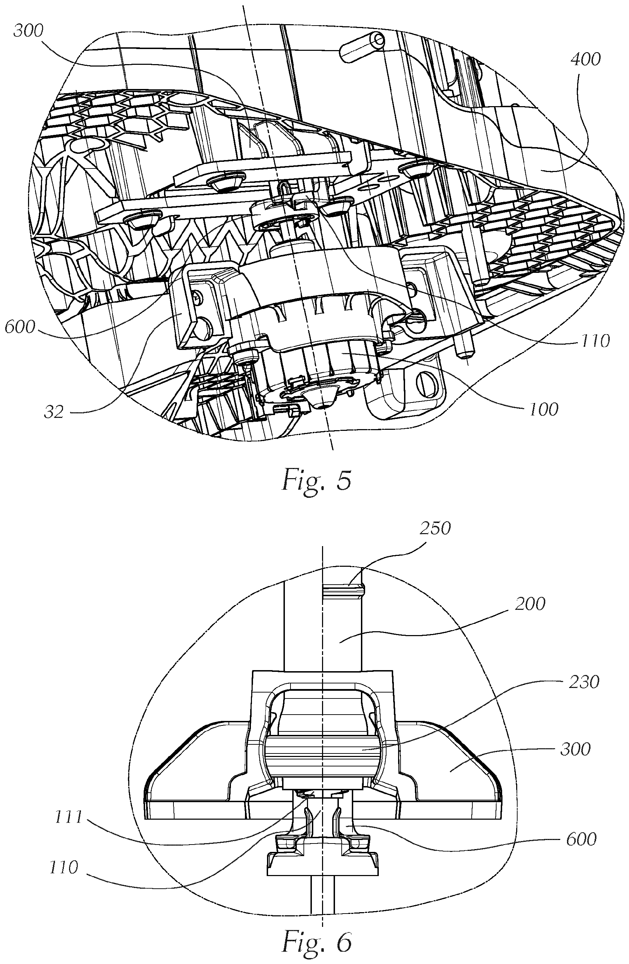

Die optisch relevante Baueinheit **20** kann einerseits ausgehend von einer Drehbewegung des zweiten Stellelements **500,** wie weiter oben beschrieben, und andererseits mit einer linearen Bewegung des ersten Stellelements **110** durch den Stellmotor **100** entlang der Verschubachse **X** bewegt bzw. in ihrer Ausrichtung verändert werden. Dabei ist, wie in **Fig. 5** zu sehen, die Antriebseinrichtung **100** durch ein Halterungselement **32** fest mit dem hier nicht dargestellten Gehäuse **31** des Kraftfahrzeugscheinwerfers **30** verbunden.

Beispielsweise kann die beispielhafte Einstellvorrichtung **100** für eine Leuchtweitenregulierung vorgesehen sein, wobei hierzu beispielsweise der Tragerahmen **400** zusätzlich an einem Punkt mit dem Gehäuse **31** des Kraftfahrzeugscheinwerfers **30** verbunden ist. Hierzu ist der Lagerungsabschnitt **230** des Übertragungselements **200** als symmetrische Kugelschicht ausgebildet, wobei **Fig. 6** eine Detailansicht der Lagerungsbuchse **300** und des in der Lagerungsbuchse **300** drehbar gelagerten Lagerungsabschnittes **230** des Übertragungselements **200** zeigt. In **Fig. 6** ist der Lagerungsabschnitt **230** - wie bereits erwähnt - als symmetrische Kugelschicht geformt, wobei die Lagerungsbuchse **300** eine zu der symmetrischen Kugelschicht korrespondierende Öffnung aufweist. Auf diese Weise kann die Lagerungsbuchse **300** eine Verkippung um eine horizontale Ebene aufweisen, wodurch auch Verkippungen des Tragerahmens **400** möglich werden, wenn dieser an einem Punkt des Gehäuses **31** des Kraftfahrzeugscheinwerfers **30** fixiert ist.

### BEZUGSZEICHENLISTE

| | |
|---|---|
| Einstellvorrichtung... | 10 |
| Optisch relevante Baueinheit... | 20 |
| Kraftfahrzeugscheinwerfer... | 30 |
| Gehäuse ... | 31 |
| Halterungselement ... | 32 |
| Antriebseinrichtung... | 100 |
| Erstes Stellelement... | 110 |
| Gewinde... | 111 |
| Übertragungselement... | 200 |
| Gegengewinde... | 211 |
| Zweite Öffnung... | 220 |
| Lagerungsabschnitt... | 230 |
| Elastische Zungen... | 240 |
| Vorsprünge... | 241 |
| Anschlag... | 250 |
| Lagerungsbuchse... | 300 |
| Tragerahmen... | 400 |
| Zweites Stellelement... | 500 |
| Vertiefungen... | 510 |
| Blockierungselement... | 600 |

## Patentansprüche

1. Einstellvorrichtung (10) zur Einstellung zumindest einer optisch relevanten Baueinheit (20) eines Kraftfahrzeugscheinwerfers, welche Einstellvorrichtung (10) Folgendes umfasst:
- eine Antriebseinrichtung (100) mit einem entlang einer Verschubachse (X) linear verstellbaren ersten Stellelement (110), welches drehfest angeordnet ist und einen ersten Eingriffsabschnitt (111) aufweist,
- ein mit dem ersten Stellelement (110) in mechanischen Eingriff stehendes Übertragungselement (200), wobei das Übertragungselement (200) einen zu dem ersten Eingriffsabschnitt (111) des ersten Stellelements (110) korrespondierenden ersten Gegeneingriffsabschnitt (210) aufweist,
- eine Lagerungsbuchse (300), in welcher das Übertragungselement (200) mittels einem Lagerungsabschnitt (230) des Übertragungselements (200) drehbar um die Verschubachse (X) gelagert ist, wobei die Lagerungsbuchse (300) mit einem Tragerahmen (400) fest verbunden ist, wobei auf dem Tragerahmen (400) die zumindest eine optisch relevante Baueinheit (20) anordenbar ist, und
- ein zweites Stellelement (500), das um die Verschubachse (X) drehbar gelagert ist und einen zweiten Eingriffsabschnitt (510) aufweist, wobei das Übertragungselement (200) einen zweiten Gegeneingriffsabschnitt (220) aufweist, welcher zweite Gegeneingriffsabschnitt (220) dem ersten Gegeneingriffsabschnitt (210) des Übertragungselements (200) auf der Verschubachse (X) gegenüberliegend angeordnet ist, und wobei der zweite Gegeneingriffsabschnitt (220) mit dem zweiten Eingriffsabschnitt (510) in mechanischem Eingriff steht, und wobei das zweite Stellelement (500) in Kombination mit dem ersten Eingriffsabschnitt (111) des ersten Stellelements (110) dazu eingerichtet ist, eine Drehbewegung des zweiten Stellelements (500) in eine Hubbewegung des Übertragungselements (200) entlang der Verschubachse (X) zu wandeln, wobei
der zweite Gegeneingriffsabschnitt des Übertragungselements (200) als zweite Öffnung (220) ausgebildet ist, wobei das zweite Stellelement (500) verschiebbar entlang der Verschubachse (X) in der zweiten Öffnung (220) des Übertragungselements (200) gelagert ist,
**dadurch gekennzeichnet, dass**
der erste Eingriffsabschnitt des ersten Stellelements (110) als Gewinde (111) ausgebildet ist und der erste Gegeneingriffsabschnitt des Übertragungselements (200) als erste Öffnung (210) mit einem zu dem Gewinde (111) korrespondierenden Gegengewinde (211) ausgebildet ist, wobei das Übertragungselement (200) über das Gegengewinde (211) zumindest teilweise auf dem ersten Stellelement (110) aufgeschraubt ist, wobei
der Tragerahmen (400) horizontal angeordnet ist, wenn die Einstellvorrichtung (10) in einem ordnungsgemäß verbauten Kraftfahrzeugscheinwerfer eingebaut ist, und wobei
die Verschubachse (X) vertikal angeordnet ist, wobei der Tragerahmen aufgrund seines Eigengewichts derart auf der Lagerbuchse aufliegt, sodass die Einstellvorrichtung vorbelastet ist.

2. Einstellvorrichtung nach Anspruch 1, **dadurch gekennzeichnet, dass** das zweite Stellelement (500) zumindest teilweise in der im Wesentlichen kreisförmigen, konzentrisch zur Verschubachse (X) angeordneten zweiten Öffnung (220) des Übertragungselements (200) aufgenommen ist, wobei das Übertragungselement (200) als Überdrehschutz elastische Zungen (240) aufweist, die am Umfang der zweiten Öffnung (220) angeordnet sind und sich entlang der Verschubachse (X) erstrecken, wobei die elastischen Zungen (240) Vorsprünge (241) aufweisen, die dazu eingerichtet sind, in auf dem zweiten Stellelement (500) angeordnete, korrespondierende Vertiefungen (510) einzugreifen.

3. Einstellvorrichtung nach Anspruch 2, **dadurch gekennzeichnet, dass** die Vorsprünge (241) in Form von achsenparallelen Zapfen und die dazu korrespondierenden Vertiefungen (510) als achsenparallele Rillen ausgeführt sind.

4. Einstellvorrichtung nach einem der Ansprüche 1 bis 3, **dadurch gekennzeichnet, dass** die Antriebseinrichtung (100) als linearer Stellmotor ausgebildet ist.

5. Einstellvorrichtung nach einem der Ansprüche 1 bis 4, **dadurch gekennzeichnet, dass** die Antriebseinrichtung (100) in Bezug auf den Tragerahmen (400) bewegungsfest angeordnet ist.

6. Einstellvorrichtung nach einem der Ansprüche 1 bis 5, **dadurch gekennzeichnet, dass** die Einstellvorrichtung (10) ein Blockierungselement (600) umfasst, welches in Kombination mit einem auf der Außenseite der Übertragungselements (200) angeordneten Anschlages (250) eingerichtet ist, eine Drehbewegung des Übertragungselements (200) um die Verschubachse (X) zu begrenzen.

7. Einstellvorrichtung nach einem der Ansprüche 1 bis 6, **dadurch gekennzeichnet, dass** der Lagerungsabschnitt (230) des Übertragungselements (200) als symmetrische Kugelschicht geformt ist, wobei die Lagerungsbuchse (300) eine zu der symmetrischen Kugelschicht korrespondierende Öffnung aufweist.

8. Kraftfahrzeugscheinwerfer (30) mit einem Gehäuse (31) und zumindest einer optisch relevanten Baueinheit (20) sowie mit zumindest einer Einstellvorrichtung (10) gemäß der Ansprüche 1 bis 7.

9. Kraftfahrzeugscheinwerfer nach Anspruch 8, **dadurch gekennzeichnet, dass** die Antriebseinrichtung (100) mit dem Gehäuse (31) des Kraftfahrzeugscheinwerfers (30) fest verbunden ist.

## Claims

1. Adjusting device (10) for adjusting at least one optically relevant structural unit (20) of a motor vehicle headlamp, which adjusting device (10) comprises the following:
- a drive device (100) with a first adjusting element (110) which is linearly adjustable along a displacement axis (X), is arranged in a rotationally fixed manner, and has a first engagement section (111)
- a transmission element (200) in mechanical engagement with the first actuating element (110), the transmission element (200) having a first mating engagement portion (210) corresponding to the first engagement portion (111) of the first actuating element (110)
- a bearing bushing (300), in which the transmission element (200) is mounted rotatably about the displacement axis (X) by means of a bearing section (230) of the transmission element (200), the bearing bushing (300) being fixedly connected to a supporting frame (400), it being possible for the at least one optically relevant structural unit (20) to be arranged on the supporting frame (400), and
- a second actuating element (500) which is rotatably mounted about the displacement axis (X) and has a second engagement portion (510), the transmission element (200) having a second mating engagement portion (220), which second mating engagement portion (220) is arranged opposite the first mating engagement portion (210) of the transmission element (200) on the displacement axis (X) and wherein the second mating engagement portion (220) is mechanically engaged with the second engagement portion (510), and wherein the second actuator (500) in combination with the first engagement portion (111) of the first actuator (110) is adapted to convert a rotational movement of the second actuator (500) into a stroke movement of the transmission element (200) along the shift axis (X),
wherein the second counter-engagement portion of the transmission element (200) is formed as a second opening (220), wherein the second actuating element (500) is supported in the second opening (220) of the transmission element (200) so as to be displaceable along the displacement axis (X),
**characterized in that**
the first engagement portion of the first adjusting element (110) is formed as a thread (111) and the first mating engagement portion of the transmission element (200) is formed as a first opening (210) with a mating thread (211) corresponding to the thread (111), the transmission element (200) being at least partially screwed onto the first adjusting element (110) via the mating thread (211), wherein
the support frame (400) is arranged horizontally when the adjusting device (10) is installed in a properly installed motor vehicle headlamp, and wherein
the displacement axis (X) is arranged vertically, wherein the support frame rests on the bearing bush due to its own weight in such a way that the adjusting device is preloaded.

2. Adjusting device according to claim 1, **characterized in that** the second adjusting element (500) is at least partially accommodated in the substantially circular second opening (220) of the transmission element (200) arranged concentrically to the axis of displacement (X), wherein the transmission element (200) comprises elastic tongues (240) as overwinding protection, arranged at the periphery of the second opening (220) and extending along the displacement axis (X), wherein the elastic tongues (240) comprise projections (241) which are adapted to engage in corresponding recesses (510) arranged on the second adjusting element (500).

3. Adjusting device according to claim 2, **characterized in that** the projections (241) are designed in the form of pins parallel to the axis and the recesses (510) corresponding thereto are designed as grooves parallel to the axis.

4. Adjusting device according to one of claims 1 to 3, **characterized in that** the drive device (100) is designed as a linear servomotor.

5. Adjusting device according to one of claims 1 to 4, **characterized in that** the drive device (100) is arranged fixedly in terms of movement with respect to the supporting frame (400).

6. Adjusting device according to one of the claims 1 to 5, **characterized in that** the adjusting device (10) comprises a blocking element (600) which, in combination with a stop (250) arranged on the outside of the transmission element (200), is arranged to limit a rotational movement of the transmission element (200) about the displacement axis (X).

7. Adjusting device according to any one of claims 1 to 6, **characterized in that** the bearing portion (230) of the transmission element (200) is shaped as a symmetrical spherical layer, wherein the bearing bushing (300) has an opening corresponding to the symmetrical spherical layer.

8. Motor vehicle headlamp (30) having a housing (31) and at least one optically relevant assembly (20), and having at least one adjusting device (10) according to claims 1 to 7.

9. Motor vehicle headlamp according to claim 8, **characterized in that** the drive device (100) is fixedly connected to the housing (31) of the motor vehicle headlamp (30).

## Revendications

1. Dispositif de réglage (10) pour le réglage d'au moins une unité de construction (20) optiquement importante d'un projecteur de véhicule automobile, lequel dispositif de réglage (10) comprend ce qui suit :
- un dispositif d'entraînement (100) avec un premier élément de réglage (110) réglable linéairement le long d'un axe de déplacement (X), lequel est disposé de manière fixe en rotation et présente une première section d'engagement (111),
- un élément de transmission (200) en prise mécanique avec le premier élément de réglage (110), l'élément de transmission (200) présentant une première section de contre-prise (210) correspondant à la première section de prise (111) du premier élément de réglage (110),
- un coussinet de palier (300) dans lequel l'élément de transmission (200) est logé au moyen d'une section de palier (230) de l'élément de transmission (200) de manière à pouvoir tourner autour de l'axe de déplacement (X), le coussinet de palier (300) étant relié de manière fixe à un cadre de support (400), l'au moins une unité de construction (20) optiquement pertinente pouvant être disposée sur le cadre de support (400), et
- un deuxième élément de réglage (500) qui est monté à rotation autour de l'axe de déplacement (X) et qui présente une deuxième section d'engagement (510), l'élément de transmission (200) présentant une deuxième section d'engagement opposé (220), laquelle deuxième section d'engagement opposé (220) est disposée en face de la première section d'engagement opposé (210) de l'élément de transmission (200) sur l'axe de déplacement (X), et dans lequel la deuxième partie de contre-embrayage (220) est en prise mécanique avec la deuxième partie de mise en prise (510), et dans lequel le deuxième élément de réglage (500), en combinaison avec la première partie de mise en prise (111) du premier élément de réglage (110), est conçu pour convertir un mouvement de rotation du deuxième élément de réglage (500) en un mouvement de levage de l'élément de transmission (200) le long de l'axe de poussée (X),
la deuxième section de contre-embrayage de l'élément de transmission (200) étant réalisée sous la forme d'une deuxième ouverture (220), le deuxième élément de réglage (500) étant logé de manière à pouvoir être déplacé le long de l'axe de déplacement (X) dans la deuxième ouverture (220) de l'élément de transmission (200),
**caractérisé en ce que**
la première section d'engagement du premier élément de réglage (110) est réalisée sous forme de filetage (111) et la première section d'engagement opposé de l'élément de transmission (200) est réalisée sous forme de première ouverture (210) avec un contre-filetage (211) correspondant au filetage (111), l'élément de transmission (200) étant vissé au moins partiellement sur le premier élément de réglage (110) par le contre-filetage (211), où
le cadre de support (400) est disposé horizontalement lorsque le dispositif de réglage (10) est monté dans un projecteur de véhicule automobile correctement installé, et dans lequel
l'axe de déplacement (X) est disposé verticalement, le cadre de support reposant, en raison de son propre poids, sur le coussinet de telle sorte que le dispositif de réglage est préchargé.

2. Dispositif de réglage selon la revendication 1, **caractérisé en ce que** le deuxième élément de réglage (500) est logé au moins partiellement dans la deuxième ouverture (220) de l'élément de transmission (200), de forme essentiellement circulaire et disposée concentriquement à l'axe de poussée (X), l'élément de transmission (200) présentant des languettes élastiques (240) en tant que protection contre la rotation excessive, disposées à la périphérie de la deuxième ouverture (220) et s'étendant le long de l'axe de poussée (X), les languettes élastiques (240) présentant des saillies (241) adaptées pour s'engager dans des cavités correspondantes (510) disposées sur le deuxième élément de réglage (500).

3. Dispositif de réglage selon la revendication 2, **caractérisé en ce que** les saillies (241) sont réalisées sous forme de tenons parallèles à l'axe et les creux (510) qui leur correspondent sont réalisés sous forme de rainures parallèles à l'axe.

4. Dispositif de réglage selon l'une des revendications 1 à 3, **caractérisé en ce que** le dispositif d'entraînement (100) est conçu comme un servomoteur linéaire.

5. Dispositif de réglage selon l'une des revendications 1 à 4, **caractérisé en ce que** le dispositif d'entraînement (100) est monté fixe en mouvement par rapport au cadre support (400).

6. Dispositif de réglage selon l'une des revendications 1 à 5, **caractérisé en ce que** le dispositif de réglage (10) comprend un élément de blocage (600) qui, en combinaison avec une butée (250) disposée sur la face extérieure de l'élément de transmission (200), est agencé pour limiter un mouvement de rotation de l'élément de transmission (200) autour de l'axe de translation (X).

7. Dispositif de réglage selon l'une quelconque des revendications 1 à 6, **caractérisé en ce que** la portion de support (230) de l'élément de transmission (200) est formée comme une couche sphérique symétrique, le coussinet (300) présentant une ouverture correspondant à la couche sphérique symétrique.

8. Projecteur de véhicule automobile (30) comprenant un boîtier (31) et au moins un ensemble optiquement pertinent (20) ainsi qu'au moins un dispositif de réglage (10) selon les revendications 1 à 7.

9. Projecteur de véhicule automobile selon la revendication 8, **caractérisé en ce que** le dispositif d'entraînement (100) est solidaire du boîtier (31) du projecteur de véhicule automobile (30).
